# EUROPÄISCHE PATENTSCHRIFT

(11) **EP 0 378 790 B1**
(45) Veröffentlichungstag und Bekanntmachung des Hinweises auf die Patenterteilung: **30.03.1994**
(21) Anmeldenummer: 89122219.2
(22) Anmeldetag: 01.12.1989
(51) Int. Cl.: F16B 33/02, F16B 7/18

(54) **Bauelement als Teil einer Schraubverbindung**
Assembly element with a threaded connecting part
Elément d'un assemblage ayant une partie de connexion taraudée

(30) Priorität: 02.12.1988 DE 3840701; 04.03.1989 DE 3906966
(43) Veröffentlichungstag der Anmeldung: 25.07.1990
(73) Patentinhaber: Rahmlow, Rolf-Rüdiger, D-38102 Braunschweig (DE)
(72) Erfinder: Rahmlow, Rolf-Rüdiger, D-38102 Braunschweig (DE)
(74) Vertreter: Einsel, Martin, Dipl.-Phys.

(56) Entgegenhaltungen:
- AT-A- 339 097
- CH-A- 247 514
- GB-A- 1 072 254
- GB-A- 2 202 291

## Beschreibung

Die Erfindung betrifft ein Bauelement als Teil einer Schraubverbindung mit wenigstens einer von einer Außenfläche ausgehenden Kernbohrung nichtkreisförmigen Querschnittes zum Eingreifen eines Steckschlüssels, welche mit einem Innengewinde ausgerüstet ist, dessen Gewindegänge auf einem Teil des Umfanges der Kernbohrung in ihrer Funktion beim Zusammenwirken mit einem Gegengewinde eines weiteren Bauteiles erhalten bleiben.

Schraubverbindungen sind in vielfacher Anzahl bekannt. Es wird dabei jeweils das Außengewinde eines Bauelementes in Eingriff mit dem Innengewinde eines zweiten Bauelementes gebracht. Zur Herstellung der Schraubverbindung muß eine Antriebsübertragung vorgesehen werden, die eines der beiden Bauelemente um seine Gewindeachse im Verhältnis zu dem anderen Bauelement dreht.

Für diese Antriebsübertragungen sind bekannt außenliegende Sechskante bei Schrauben und Muttern, Schlitze und Kreuzschlitze in Schraubenköpfen oder Ansatzflächen für Rohrzangen bei Rohrverschraubungen.

Es gibt jedoch eine Reihe von Fällen, in denen mehrere Bauelemente additiv in einer Achse miteinander gekoppelt werden sollen. Dies ist beispielsweise bei Rohrleitungen der Fall. Sollen hier zwei Rohre axial miteinander verschraubt werden, so kann jedes Rohr ein Ende mit einem Innengewinde sowie ein Ende mit einem Außengewinde aufweisen, die paarweise miteinander verschraubt werden können.

Alternativ ist es gebräuchlich, beide Rohrenden mit Außengewinden zu versehen und eine Muffe mit Innengewinden zum verbindenden Zusammenschrauben einzusetzen.

In allen Fällen muß ein Antrieb vorgesehe werden, um das eine Rohr im Verhältnis zum anderen Rohr um seine Achse drehen zu können. Hierfür ist es bekannt, die bereits erwähnten Ansatzflächen für Rohrzangen vorzusehen. Diese Ansatzflächen und die ggf. einzusetzenden Verbindungsmuffen bedingen natürlich, daß in Achsrichtung die sich ergebende Außenfläche der Rohrleitung keineswegs gleichmäßig ist. An den Verbindungsstellen der Rohre ergeben sich große Querschnittsveränderungen, die sowohl nach außen aus der Rohrform vorspringen oder als Einformungen oder Ausnehmungen in der Rohrform ausgebildet sein können.

In einer Reihe von Fällen ist dies jedoch, nicht wünschenswert. Dies ist beispielsweise bei zusammensetzbaren Werkzeugen mit rotierenden Teilen der Fall, bei denen Vorsprünge die Verletzungsgefahr erhöhen könnten.

Zu beachten ist auch der optisch-ästhetische Gesichtspunkt, etwa bei Möbelstücken, die zusammengesetzt werden sollen. Hier soll häufig der Eindruck eines einstückigen Teiles erweckt werden, auch wenn es aus mehreren axialen Bauelementen zusammengesetzt ist.

Zur Lösung ist bereits vorgeschlagen worden, parallel zur Gewindeachse einen Einschnitt vom freien Ende des Gewindes aus über eine kleine Strecke in das Bauelement vorzusehen, und zwar diametral auf zwei einander gegenüberliegenden Seiten des Gewindes. In die hierdurch entstehenden beiden Schlitze kann dann eine Stange bzw. ein Stab eingeführt werden, der beidseitig aus aus dem Rohr herausragt und zur Kraftübertragung genutzt werden kann.

Diese Möglichkeit hat den Nachteil, daß sie in der radialen Umgebung des Rohres genügend Platz erfordert. Außerdem wird wiederum die ästhetische, ungestörte Außenoberfläche nachteilig beeinflußt, und letztlich ist auch die Kraftübertragung unbefriedigend.

Eine solche Konstruktion erfordert einen zusätzlichen arbeitsaufwendigen Fräsgang. Es fehlt auch die seitliche Führung, was vor allem dann nachteilig ist, wenn es sich um sehr kleine Gewinde handelt. Ein Hineingleiten mit einem Schraubenzieher in Achsrichtung ist daher sehr ungünstig, da dieser seitlich aus dem Einschnitt herausrutschen kann und außerdem in seinen Abmessungen sehr genau an den Gewindedurchmesser und die Einschnittsabmessungen angepaßt sein muß. Auch maschinelles Setzen und Einschrauben ist dadurch sehr erschwert.

Eine solche als "Rampa"-Verschraubung bekannte Konstruktion wird u.a. eingesetzt, wenn in einem Holzteil ein metrisches Innengewinde eingebracht werden soll. Eine Holzschraube besitzt dabei ein metrisches Innengewinde und achsparallele Einschnitte zur Aufnahme eines Schraubenziehers. Mit diesem kann die Holzschraube, die im übrigen natürlich keinen weiteren Schraubenkopf aufweist, in ein Brett oder dgl. eingeschraubt werden, um anschließend für weitere metrische Verschraubungen zur Verfügung zu stehen.

Der Nachteil einer solchen Konstruktion besteht u.a. auch in der ungünstigen Kraftübertragung, die allein über den kleinen Einschnitt erfolgen muß und daher u.U. zu Beschädigungen oder Zerstörungen des Gewindes führen kann.

Bekannt sind auch Bauelemente, die ein Außengewinde und achsparallel zum Außengewinde eine Innenausnehmung mit mehrkantigem Querschnitt besitzen. Diese innere Ausnehmung kann mittels eines Steckschlüssels als Kraftübertragung zum Drehen benutzt werden. Auch hier ist die Kraftübertragung nicht befriedigend, da die Dimensionierung der Ausnehmung einerseits und des Bauteils mit dem Gewinde andererseits nicht zueinander passen können. Auch sind die Verwendungsmöglichkeiten solcher Bauelemente sehr begranzt.

Aus der CH-PS 247 514 ist ferner eine Schraubenmutter bekannt, die Verwendung finden soll, wenn für hermömmliche Schrauben oder Muttern mit Außensechskant der Platz fehlt. Zu diesem Zweck wird das Gewinde der Schraubenmutter durch eine Innenbetätigungsform hindurchgeschnitten. Die Betätigungsform wird dabei als Innenzwölfkant ausgebildet. Mit einer derartigen Schraubenmutter sollen keine großen Verschraubungskräfte ausgeübt werden, da die Betätigungsflächen sehr geschwächt sind. Diese Schraubenmuttern haben sich in der Praxis nicht durchsetzen können, da ihre Herstellung extrem kostspielig ist. Für die Herstellung sind drei Arbeitsschritte erforderlich. Zunächst muß der Drehantrieb, also die Betätigungsform, in die Schraube hineingeschnitten werden. Anschließend muß eine runde Hernbohrung durch die gesamte Mutter hindurchgeführt werden und schließlich auch noch eine Gewinde geschnitten werden. Darüber hinaus ist die Anwendung der Schraubenmutter, wie in dieser Druckschrift auch angegeben, durch die erhebliche Schwächung sehr eingeschränkt.

Aufgabe der Erfindung ist es daher, ein gattungsgemäßes Bauelement vorzuschlagen, bei dem eine verbesserte Kraftübertragung möglich wird.

Diese Aufgabe wird dadurch gelöst, daß die Profilierung der Kernbohrung sich von der Außenfläche tiefer als das Innengewinde in das Bauelement erstreckt.

Dadurch wird es möglich, die vorhandene Ausnehmung mit dem Innengewinde doppelt zu nutzen: In einer ersten Funktion wird das axiale Einschieben eines Steckschlüssels zur Kraft- bzw. Momentenübertragung auf die Verschraubung gewährleistet, in der zweiten Funktion bewirkt das Innengewinde in der gleichen Ausnehmung eine Verschraubung mit einem weiteren Bauelement in derselben Achse ohne Querschnittsveränderung. Es kann eine additive Koppelung von Bauteilen in einer Achse ohne große Querschnittsveränderungen erfolgen.

Bei einem Rohr aus drei identischen, erfindungsgemäßen Bauelementen wird dies sofort einleuchtend: Zwei dieser Bauelemente werden mit einem Innen- bzw. einem Außengewinde aufeinandergeschraubt, wobei die Drehung der beiden Elemente zueinander dadurch bewirkt wird, daß ein Steckschlüssel in dem einen Bauelement an dem der gerade stattfindenden Verschraubung abgewandten Ende eingeführt und gedreht wird. Nach Fertigstellung dieser Verbindung wird der Steckschlüssel entfernt, ein drittes Bauelement axial mit seinem Außengewinde dort eingeführt, wo eben noch der Steckschlüssel für die Kraftübertragung sorgte. Der Steckschlüssel wird jetzt wiederum an dem anderen, abgewandten Ende eingeführt usw.

Die Probleme gemäß der CH-PS 247 514 treten bei dieser Konstruktion nicht auf. Die Herstellung ist erheblich günstiger, da nur zwei Arbeitsschritte benötigt werden. Im ersten Arbeitsgang wird die profilierte Kernbohrung in das Bauelement eingebracht. Handelt es sich etwa um ein Rohr, so kann hier ein stranggepreßtes Rohr mit durchgehender sechseckiger Innenprofilierung eingesetzt werden. Im zweiten Arbeitsschritt wird das Gewinde über die benötigte Strecke von der Außenfläche aus in die Kernbohrung eingeschnitten. Weitere Arbeitsschritte sind nicht erforderlich.

Auch die Kraftübertragung verbessert sich: Der Steckschlüssel kann eine praktisch beliebige Länge besitzen, da er durch das gesamte Innengewinde hindurch erstreckt werden kann. Dadurch kann die durch ihn erreichte Angriffsfläche so ausgedehnt werden, wie dies dem jeweiligen Anwendungszweck nach erforderlich ist.

Eine bevorzugte Auführungsform der Erfindung zeichnet sich dadurch aus, daß die profilierte Kernbohrung sich durch das gesamte Bauelement hindurch erstreckt. Ein Beispiel wäre etwa ein stranggepreßtes Rohr mit durchgehendem Innensechskant.

Alternativ kann sich auch die profilierte Kernbohrung längs durch einen Rohrdübel mit einem Außenquerschnitt erstrecken, der in eine Ausnehmung entsprechenden Innenquerschnittes des Bauelementes eingesetzt ist.

Damit kann jetzt auf besonders kostengünstige Bauelemente, beispielsweise Rohre, zurückgegriffen werden, die bereits mit einem etwa kreisförmigen Innenquerschnitt ausgestattet sind. In diesen kreisförmigen Innenquerschnitt kann von außen ein Rohrdübel eingesetzt werden. Dieser Rohrdübel wird getrennt angefertigt und mit einer durchgehenden profilierten Kernbohrung versehen, die in diesem Falle nur die entsprechenden kürzeren Abmessungen des Rohrdübels durchmißt. Auch in dem Rohrdübel selbst kann gleich das Innengewinde eingeschnitten werden, ohne daß eine entsprechende Bearbeitung des gesamten Bauelementes erforderlich ist. Der so angefertigte Rohrdübel wird in das Bauelement eingesetzt und dort befestigt, etwa eingeschweißt.

Im Rohrleitungsbau besonders günstig ist es, wenn das Bauelement ein Rohr ist, das an einem Längsende die profilierte Kernbohrung mit dem Innengewinde aufweist und am anderen Längsende ein mit dem Innengewinde eines gleichartigen Bauelementes in Eingriff bringbares Außengewinde aufweist.

Dadurch können die jeweiligen Rohre (Bauelemente) axial unmittelbar aneinandergeschaubt werden.

Die Erfindung läßt sich auch für Verschraubungen außerhalb des Rohrleitungsbaues verwenden. Nicht nur Rohrleitungen für flüssige und gasförmige Medien können so auf einfachste Weise zusammengestellt werden, sondern auch Möbel zum Zusammenbauen, etwa Schrankwände im Selbstbauverfahren oder andere Konstruktionsbereiche sind so einzubeziehen. Die Bauelemente müssen auch nicht unbedingt rohrförmig sein. Gerade unhandliche Bauteile, die verschraubt werden sollen und bei denen eine Kraftübertragung nur in axialer Richtung möglich ist, können so verbessert werden.

Bei derartigen Möbeln ist bisher beispielsweise eine Befestigung gemäß der AT-PS 339 097 bekannt, bei der Schraubmuffen mit axialen Längsnuten versehen werden, die Längsverschiebungen von Schraubmuffen ermöglichen und durch Riegel festgelegt werden können. Natürlich wird dadurch wiederum der einheitliche Aufbau der fertigen Elemente gestört, auch wird wieder erhablicher Platz in radialer Richtung benötigt. Die mit der vorliegenden Erfindung gelöste Problematik wird mit derartigen Schraubenmuffen auch nicht angesprochen.

Eine weitere Anwendungsmöglichkeit der Erfindung ist etwa der Getriebebau, bei dem verschiedene Getriebeebenen miteinander verbunden werden sollen.

Eine bevorzugte Ausführungsform zeichnet sich dadurch aus, daß der Querschnitt des Einsteckabschnittes in Achsrichtung des Innengewindes konstant ist. Dadurch werden die zur Verfügung stehenden Kraftübertragungsflächen am besten ausgenutzt. Zugleich ist die Herstellung des erfindungsgemäßen Bauelementes auf diese Weise besonders einfach möglich.

Eine weitere Verbesserung in dieser Richtung wird dadurch möglich, daß der Querschnitt der Kernbohrung ein Polygon ist.

Ganz besonders bevorzugt ist es, wenn das Polygon ein regelmäßiges Sechseck ist. Zum einen können für die Steckschlüssel in diesem Falle die bereits gängigen Größen mit sechseckigem Querschnitt verwendet werden.

Zum anderen wird durch einen regelmäßigen sechseckigen Querschnitt der Verlauf der Gewindeflanken am wenigsten gestört, so daß der Schraubvorgang und auch das Zusammenhalten der festgeschraubten Bauelemente am besten gewährleistet ist.

Als Rohmaterial für die Herstellung etwa rohrähnlicher erfindungsgemäßer Bauelemente beitet sich ein einfaches Innensechskantrohr an. Durch ein einfaches einmaliges Automatendrehen läßt sich daraus bereits ein Bauelement mit den erfindungsgemäßen Merkmalen erzielen. Zusätzliche Fräsgänge oder andere bei bekannten Bauelementen erforderliche Maßnahmen können hier entfallen.

Als Innensechskante bieten sich etwa Rohre nach DIN-911 an; für das einzuschneidende Gewinde kommt etwa ein Iso-Gewinde nach DIN-13T1 in Frage, selbstverständlich sind aber auch Zollgewinde und andere Varianten denkbar.

In einen solchen Innensechskant kann bei der Verschraubung der Steckschlüssel auch praktisch automatisch eingeführt werden, was das maschinelle Setzen und Verschrauben sehr begünstigt. Einfache Drehungen um weniger als 60° genügen für den Automaten zum Einführen des Steckschlüssels.

Für Rohre beiten sich durchgehende Innensechskante an, auf die an beiden Seiten ein Gewinde erfindungsgemäß eingeschnitten wird. Jeweils zwei derartige Rohrelemente können dann mittels eines Hohlbolzens mit axial durchgehender Öffnung und Außengewinde miteinander verbunden werden, wobei für die Reihenfolge des Zusammenfügens der Elemente durch die günstige Kraftübertragung mehrere Möglichkeiten gegeben sind, die je nach den äußeren Bedingungen gewählt werden können.

Dadurch, daß die Kraft- und Momentenübertragung auf die Bauteile praktisch in der gleichen Ebene wie die der Gewindegänge erfolgt, ergeben sich optimale Werte. Zugleich werden Beschädigungen vermieden.

In besonderen Einzelfällen kann es von Vorteil sein, wenn anstelle der nicht kreisförmigen; aber konstanten Querschnitte zum Eingreifen eines Steckschlüssels in dem das Innengewinde aufweisenden Teilabschnitt ein zweites Innengewinde mit von dem ersten Innengewinde deutlich verschiedener Steigung vorgesehen wird.

Ein solches Bauelement ist komplizierter und damit deutlich kostspieliger als das Bauelement der ersten Variante. In das zweite Innengewinde kann hier ein Halteelement eingeschraubt werden, das die Funktion des Steckschlüssels der ersten Variante übernimmt. Eine solche Konstruktion verhindert, daß das dem Steckschlüssel entsprechende Festhalteelement während des Zusammenschraubens in Achsrichtung durch irgendwelche Umstände aus dem Bauelement herausgezogen wird oder herausgleiten kann. Das Festhalteelement selbst muß zum lösen seinerseits wieder herausgeschraubt werden.

Aus der US-PS 3 482 481 ist ein Schraubenkopf mit unterschiedlichen Steigungen eines Innengewindes sowie eines außen auf der Außenfläche angebrachten Außengewindes bekannt, das jedoch anderen Zwecken dient, nämlich dem einfacheren Festziehen eines radial angreifenden Schraubenschlüssels.

Im folgenden wird anhand der Zeichnung ein Ausführungsbeispiel der Erfindung im einzelnen dargestellt.

Es zeigen:
- Fig. 1: einen Querschnitt parallel zur Gewindeachse durch eine Verschraubung,
- Fig. 2: einen Rohrquerschnitt senkrecht zur Achse, noch ohne Gewinde,
- Fig. 3: einen Rohrquerschnitt senkrecht zur Achse mit angedeutetem Gewinde und
- Fig. 4: einen achsparallelen Querschnitt durch ein Innengewinde eines erfindungsgemäßen Bauelementes.

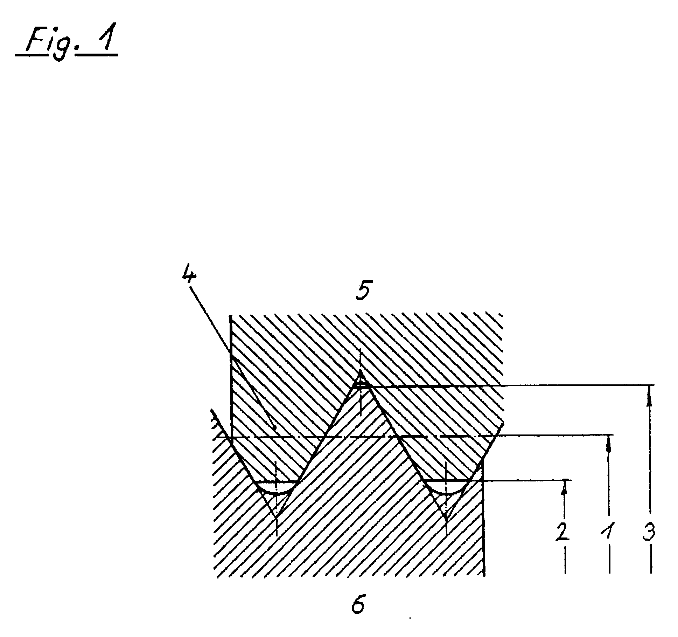

In Fig. 1 sind zur Verdeutlichung der Erfindung zunächst einige der im weiteren Verlauf der Figurenbeschreibung verwendeten Begriffe erklärt. Dargestellt ist jeweils ein Ausschnitt aus einem Innengewinde 5 und einem Außengewinde 6, die ineinandergeschraubt sind. Es bilden sich dabei jeweils im Querschnitt dreieckige Formen, sog, Profildreiecke 4. Die Kraft- und Drehmomentübertragung beim Einschrauben des Körpers mit dem Außengewinde 6 in den Körper mit dem Innengewinde 5 findet überwiegend an den Flanken der Profildreiecke 4 statt. Die Gewinde werden dabei charakterisiert durch mehrere Maße. Diese Maße sind vereinheitlicht und genormt. Der Durchmesser des Körpers mit dem Außendurchdurchmesser kann dabei auf verschiedene Weise angegeben werden. Bei metrischen Isogewinden unterscheidet man den Flanken-, den Kern- und den Gewinde-Nenn-Durchmesser. Bei dieser Benennung ist zu berücksichtigen, daß die Flankenspitzen und -täler der Gewinde schon aus physikalischen und materialtechnischen Gründen nicht vollständig ausgeformt sind. Die Profildreiecke 4 weisen daher abgerundete oder abgeflachte Spitzen auf. Der sog. Flanken-Durchmesser 1 bezeichnet den Abstand zwischen den beiderseitigen Mittelpunkten der Flanken der Profildreiecke 4 auf zwei einander gegenüberleigenden Seiten des Körpers mit dem Außengewinde 6. Der Kern-Durchmesser 2 ist dementsprechend der Durchmesser zwischen den äußersten Spitzen des Innengewindes 5 des zweiten Körpers und der Gewinde-Nenn-Durchmesser 3 der Abstand zwischen den äußersten, abgeflachten Spitzen der Profildreiecke 4 des Außengewindes 6.

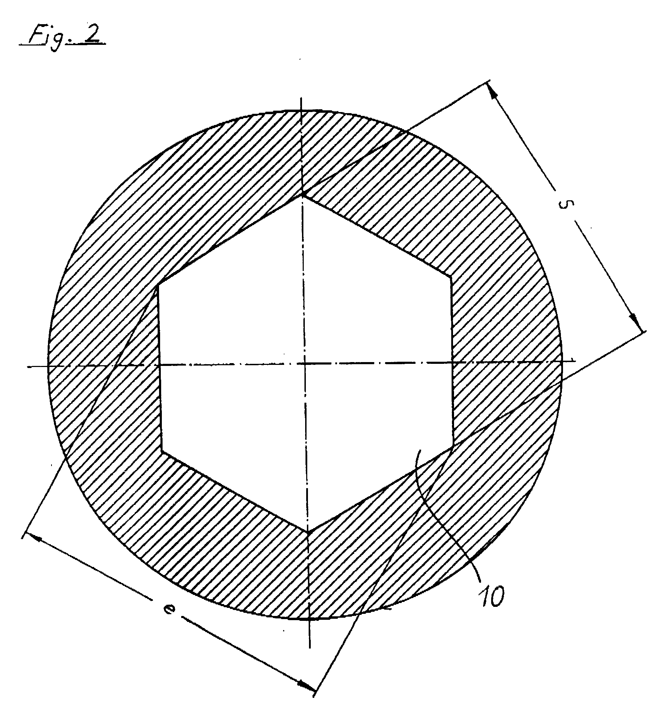

Fig. 2 zeigt einen Rohrquerschnitt mit einer sechseckigen Öffnung 10, die zur Aufnahme eines entsprechenden Steckschlüssels dient. Der Außen-Durchmesser 11 des Rohres ist angedeutet, die sechseckige Öffnung 10 kann aber auch in jedes andere Werkstück eingebracht werden. Anstelle der sechseckigen Form der Öffnung 10 sind auch andere Querschnitte denkbar, z.B. Dreiecke, Vierecke, Vielecke, mehrarmige ausgerundete Sternformen, etwa sog. Torx-Querschnitte.

Alle profilierten Öffnungen haben einen Minimal-Durchmesser s und einen Maximal-Durchmesser e. Auf dem Unterschied zwischen diesen beiden Durchmessern basiert die Möglichkeit, mit einem Steckschlüssel ein Drehmoment zu übertagen.

Bevorzugt werden symmetrische Formen um einen Innenkreis.

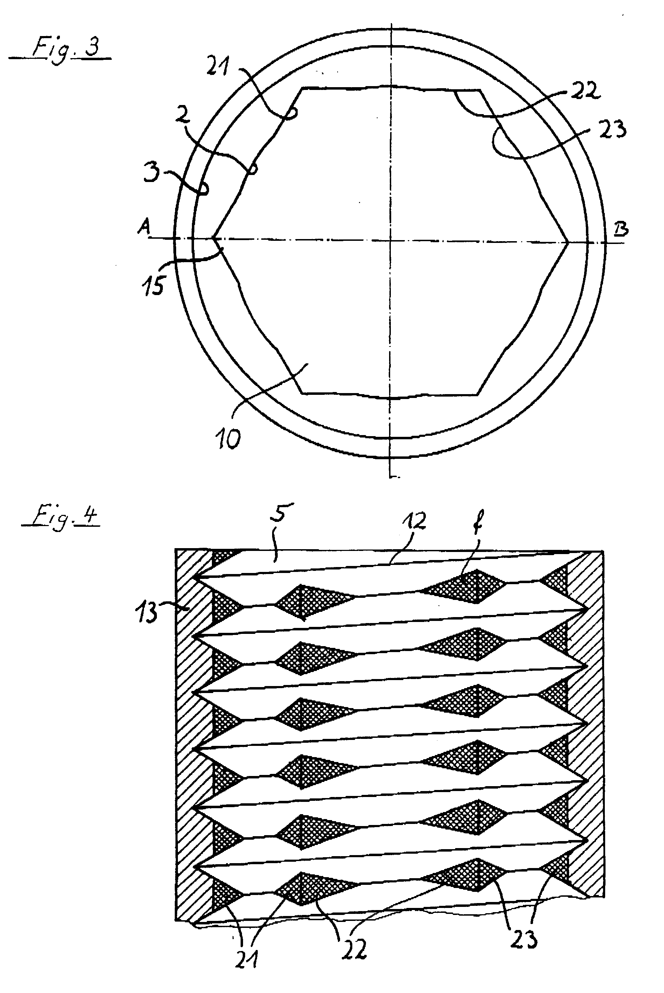

Fig. 3 zeigt nun eine Ausbildung entsprechend Fig. 2 mit einem eingeschnittenen Innengewinde 5. Der Minimal-Durchmesser s tangiert den Kern-Durchmesser 2 des Innengewindes 5. Der Maximal-Durchmesser e befindet sich zwischen dem Kern-Durchmesser 2 und dem Gewinde-Nenn-Durchmesser 3.

Die Öffnung 10 besitzt also in dem Teilabschnitt 15 mit dem Innengewinde 5 neben dem durch das Gewinde bedingten kreisförmigen Querschnitt Erweiterungen, die durch die Ecken des sechseckigen Querschnitts gegeben sind. Diese beiden Querschnitte überlagern einander. Der Teilabschnitt 15 wird so zu einem Einsteckabschnitt, in den ein Steckschlüssel mit sechseckigem entsprechendem Querschnitt eingesteckt werden kann.

Bei Rohrverschraubungen, die abgedichtet werden müssen, ist es notwendig, daß der Maximal-Durchmesser e des Profils aus Fig. 2 den Gewinde-Nenn-Durchmesser 3 nicht überschreitet, damit die Flüssigkeit bzw. das Gas, das am Durchtritt gehindert werden soll, nicht durch die entstehenden Ecken gelangen kann.

Bei rein konstruktiven Verbindungen ist dagegen eine Überschreitung des Gewinde-Nenn-Durchmessers 3 durch den Maximal-Durchmesser e des Profils der Öffnung möglich.

Fig. 4 zeigt die im Innengewinde 5 verbliebenen Profilflächen der Öffnung 10, die als Kraftübertragungsflächen f dienen. Zu erkennen sind mehrere Gewindegänge 12, die in die Außenwandung eines rohrförmigen Körpers 13 eingeschnitten sind. Nur die Kraftübertragungsflächen f unterscheiden das Innengewinde 5 von herkömmlichen Innengewinden. Die Kraftübertragungsflächen f entstehen in dem dargestellten Ausführungsbeispiel durch eine Öffnung 10 mit einem sechseckigen Querschnitt; es handelt sich um einen Schnitt längs der Linie A-B aus Fig. 3.

Zu erkennen sind in Fig. 4 die drei Seiten 21,22 und 23 aus Fig. 3. Diese drei Seiten stellen sich in Fig. 4 jeweils durch zwei dreieckige Schnittflächen pro Gewindegang dar. Am besten ist dies für die Seite 22 zu erkennen, die auch in Fig. 4 in der Mitte liegt.

Es schließen sich die Seiten 21 und 23 jeweils an. Aufgrund der verkürzten Perspektive sind dort die Dreieckflächen gegenüber denen der Seite 22 verkürzt zusammengezogen, da sie nur schräg von der Seite zu erkennen sind. Die Dreieckflächen zweier benachbarter Seiten schließen jeweils aneinander an und bilden miteinander einen Winkel von 120°, da es sich um einen sechseckigen Querschnitt der Öffnung 10 handelt.

Die Dreiecksflächen bilden sich jeweils an den Ausnehmungserweiterungen 15, also an den Ecken des Polygon-Querschnitts.

Zwischen den beiden Dreiecksflächen pro Gewindegang und Seite des Sechsecks befindet sich ein Bereich, in dem keine Kraftübertragungsfläche f liegt, sondern in dem das Gewinde ungestört ist. Dies dient der Sicherung der Einschraubung. Grundsätzlich wäre es natürnlich auch möglich, den Minimal-Durchmesser s der Öffnung 10 so weit zu vergrößern, daß die Kraftübertragungsflächen f über das gesamte Innengewinde 5 verteilt werden, um die Kraftübertragung zu verbessern.

Alternativ kann etwa fehlende Kraftübertragung aber auch durch eine verlängerte Eintauchtiefe des Steckschlüssels kompensiert werden. Gleiches gilt für die verminderte Festigkeit der Verschraubung gegenüber völlig herkömmlichen, ungestürten Innengewinden. Die optimale Lösung wird in diesem Falle vom Fachmann in Abhängigkeit von Verwendungszweck und Materialmöglichkeiten gewählt werden.

Die Summe de Einzelflächen f bestimmt die Höhe des möglichen übertragbaren Drehmoments. Die Kraftübertrangungsflächen f sind in jedem Gewindegang axial überinander angeordnet und alle übereinanderliegenden Flächen sind identisch. Dies entsteht automatisch dadurch, daß jeder Gewindegang dem darüber- und darunterliegenden entspricht und auch der Querschnitt der Öffnung 10 über die Tiefe dieser Öffnung konstant ist.

Die Drehmomente kommen genau in dem Bereich zwischen dem Kern-Durchmesser 2 und dem Gewinde-Nenn-Durchmesser 3 zur Wirkung. Die Kraftantriebsflächen sind also räumlich nicht mehr von dem Gewinde getrennt angeordnet.

## Patentansprüche

1. Bauelement als Teil einer Schraubverbindung mit wenigstens einer von einer Außenfläche ausgehenden Kernbohrung (Öffnung 10) nichtkreisförmigen Querschnittes zum Eingreifen eines Steckschlüssels, welche mit einem Innengewinde (5) ausgerüstet ist, dessen Gewindegänge (12) auf einem Teil des Umfanges der Kernbohrung in ihrer Funktion beim Zusammenwirken mit einem Gegengewinde (6) eines weiteren Bauteiles erhalten bleiben, **dadurch gekennzeichnet**, daß die Profilierung der Kernbohrung (Öffnung 10) sich von der Außenfläche tiefer als das Innengewinde (5) in das Bauelement erstreckt.

2. Bauelement nach Anspruch 1, **dadurch gekennzeichnet**, daß die profilierte Kernbohrung (Öffnung 10) sich durch das gesamte Bauelement hindurch erstreckt.

3. Bauelement nach Anspruch 1, **dadurch gekennzeichnet**, daß die profilierte Kernbohrung sich längs durch einen Rohrdübel mit einem Außenquerschnitt erstreckt, der in eine Ausnehmung entsprechenden Innenquerschnittes des Bauelementes eingesetzt ist.

4. Bauelement nach einem der vorstehenden Ansprüche, **dadurch gekennzeichnet**, daß das Bauelement ein Rohr ist, das an einem Längsende die profilierte Kernbohrung mit dem Innengewinde aufweist und am anderen Längsende ein mit dem Innengewinde eines gleichartigen Bauelementes in Eingriff bringbares Außengewinde aufweist.

5. Bauelement nach einem der vorstehenden Ansprüche, **dadurch gekennzeichnet**, daß der Querschnitt der Kernbohrung (15) in Achsrichtung des Innengewindes (5) konstant ist.

6. Bauelement nach Anspruch 5, **dadurch gekennzeichnet**, daß der Querschnitt der Kernbohrung (15) ein Polygon ist.

7. Bauelement nach Anspruch 6, **dadurch gekennzeichnet**, daß das Polygon ein regelmäßiges Sechseck ist.

8. Bauelement als Teil einer Schraubverbindung mit wenigstens einer von einer Außenfläche ausgehenden, vorzugsweise durchgehenden Ausnehmung, welche wenigstens auf einem bis zu der Außenfläche reichenden Abschnitt mit einem Innengewinde (5) ausgerüstet ist, und welches mit einem weiteren Bauteil mit einem Gegengewinde (6) zum Eingriff in das Innengewinde (5) verbindbar ist, **dadurch gekennzeichnet**, daß wenigstens ein von der Außenfläche ausgehender mit dem ersten Innengewinde (5) versehener Teilabschnitt der Ausnehmung des Bauelementes mit einem zweiten Innengewinde versehen ist, dessen Steigung von der des ersten Innengewindes deutlich verschieden ist, so daß die Gewindegänge des ersten Innengewindes in ihrer Funktion beim Zusammenwirken mit dem Gegengewinde des weiteren Bauteiles erhalten bleiben.

## Claims

1. A structural element as part of a screw connection having at least one core bore (aperture 10) of non-circular cross-section starting from an external surface for the engagement of a spanner key, which is equipped with an internal thread (5), the threads (12) of which on a part of the circumference of the core bore maintain their function upon collaboration with a counter-thread (6) of a further structural part, characterised in that the profiling of the core bore (aperture 10) extends from the external surface deeper than the internal thread (5) into the structural element.

2. A structural element according to claim 1, characterised in that the profiled core bore (aperture 10) extends through the entire structural element.

3. A structural element according to claim 1, characterised in that the profiled core bore extends along through a hollow dowel having an external cross-section which is inserted into a recess of corresponding internal cross-section of the structural element.

4. A structural element according to any one of the preceding claims, characterised in that the structural element is a tube which at one longitudinal end has the profiled core bore with the internal thread and at the other longitudinal end has an external thread which can be brought into engagement with the internal thread of a similar structural element.

5. A structural element according to any one of the preceding claims, characterised in that the cross-section of the core bore (15) is constant in the axial direction of the internal thread (5).

6. A structural element according to claim 5, characterised in that the cross-section of the core bore (15) is a polygon.

7. A structural element according to claim 6, characterised in that the polygon is a regular hexagon.

8. A structural element as part of a screw connection having at least one, preferably through, recess which starts from an external surface and which is equipped with an internal thread (5) at least on a portion extending as far as the external surface, and which can be connected to a further structural part having a counter-thread (6) for engagement into the internal thread (5), characterised in that at least one partial portion, starting from the external surface and provided with the first internal thread (5), of the recess of the structural element is provided with a second internal thread, the pitch of which is distinctly different from that of the first internal thread, so that the threads of the first internal thread maintain their function upon collaboration with the counter-thread of the further structural part.

## Revendications

1. Élément d'assemblage ayant une partie de connexion taraudée, comportant au moins une carotte (ouverture 10) de section transversale non circulaire partant de la surface extérieure pour y loger une clé à douille munie d'un taraudage (5) dont les pas (12) sur une partie du pourtour de la carotte restent pour assurer leur fonction de coopération avec un contre-filetage (6) d'un autre élément d'assemblage, caractérisé en ce que le profil de la carotte (ouverture 10) s'étend plus profondément dans l'élément d'assemblage à partir de la surface extérieure que le taraudage (5).

2. Élément d'assemblage selon la revendication 1, caractérisé en ce que la carotte profilée (ouverture 10) s'étend à travers l'ensemble de l'élément d'assemblage.

3. Élément d'assemblage selon la revendication 1, caractérisé en ce que la carotte s'étend longitudinalement à travers une cheville tubulaire comportant une section transversale extérieure qui est logée dans un évidement de section transversale intérieure correspondante de l'élément d'assemblage.

4. Élément d'assemblage selon l'une des revendications précédentes, caractérisé en ce que l'élément d'assemblage est un tuyau qui présente à l'une des extrémités longitudinales le perçage profilé comportant le taraudage et à l'autre extrémité longitudinale un filetage extérieur pouvant être mis en prise avec le taraudage d'un élément d'assemblage analogue.

5. Élément d'assemblage selon l'une des revendications précédentes, caractérisé en ce que la section transversale de la carotte (15) est constante dans la direction de l'axe du taraudage (5).

6. Élément d'assemblage selon la revendication 5, caractérisé en ce que la section transversale de la carotte (15) est un polygone.

7. Élément d'assemblage selon la revendication 6, caractérisé en ce que le polygone est un hexagone régulier.

8. Élément d'assemblage ayant une partie de connexion taraudée, comportant au moins un évidement partant de la surface extérieure et, de préférence, traversant, qui est au moins muni d'un taraudage (5) sur une partie allant jusqu'à la surface extérieure et qui peut être relié à un autre élément d'assemblage comportant un contre-filetage (6) qui coopère avec le taraudage (5), caractérisé en ce qu'au moins une portion de l'évidement de l'élément d'assemblage qui part de la surface extérieure et qui est munie du premier taraudage (5) est munie d'un deuxième taraudage dont le pas est sensiblement différent de celui du premier taraudage, de sorte que les pas du premier taraudage restent pour assurer leur fonction de coopération avec le contre-filetage de l'autre élément d'assemblage.
